# FASCICULE DE BREVET EUROPEEN

(11) **EP 0 511 107 B1**
(45) Date de publication et mention de la délivrance du brevet: **07.06.1995**
(21) Numéro de dépôt: 92401163.8
(22) Date de dépôt: 23.04.1992
(51) Int. Cl.: G01P 3/44

(54) **Roulement à capteur tachymétrique**
Wälzlager mit Geschwindigkeitsmessaufnehmer
Rollbearing with speed sensor

(30) Priorité: 24.04.1991 FR 9105059
(43) Date de publication de la demande: 28.10.1992
(73) Titulaire: JAEGER, F-92303 Levallois-Perret (FR)
(72) Inventeur: Hennequin, Yves, F-78210 St Cyr l'Ecole (FR)
(74) Mandataire: Schrimpf, Robert

(56) Documents cités:
- DE-A- 3 523 374
- FR-A- 2 629 155
- US-A- 3 500 091
- US-A- 4 783 180

## Description

La présente invention concerne le domaine des roulements intégrant des capteurs de vitesse.

On a proposé depuis plusieurs années d'intégrer des capteurs tachymétriques dans des roulements. De tels dispositifs sont décrits par exemple dans les documents FR-A-2629155, FR-A-2558223, FR-A-2625777, US-A-4688951, US-A-4778286 et US-A-4783180.

De tels dispositifs combinant roulement et capteur tachymétrique peuvent être utilisés dans tout système comprenant deux pièces en rotation relative, pour contrôler le mouvement relatif de celles-ci.

La présente invention vise tout particulièrement le domaine des véhicules automobiles et plus précisément les roulements de roues intégrant des capteurs tachymétriques pour piloter les moyens de commande de freinage antipatinage ou antiblocage généralement dénommés "ABS". La présente invention n'est cependant pas limitée à cette utilisation particulière et peut trouver application dans le contrôle de tout système comprenant deux pièces susceptibles de rotation relative.

Le document FR -A- 2 629155 précité décrit une structure de roulement comprenant un capteur de vitesse et adapté pour autoriser un phénomène de reptation.

La structure décrite dans ce document comprend une cage externe, une cage interne, des corps de roulement répartis entre la cage externe et la cage interne, l'une de ces cages étant prévue pour être fixée sur un chassis, un aimant annulaire multipolaire sur la cage mobile et un translucteur électrique sensible aux passages de l'aimant annulaire placé sur un élément support lié à rotation avec le chassis par l'intermédiaire d'au moins un doigt conçu pour interférer avec le chassis,

Selon ce document FR -A- 2 629 155, l'élément support est formé d'une pièce d'étanchement disposée sur la cage fixe, laquelle peut tourner vis à vis de la pièce d'étanchement, tandis que cette dernière est montée bloquée en rotation sur le chassis recevant la cage fixe, Selon un mode de réalisation, le doigt de blocage précité est formé sur un corps en tôle portant la pièce d'étanchement, lequel doigt s'emboite dans un évidement correspondant du chassis.

Les dispositifs combinant roulement et capteur tachymétrique, jusqu'ici proposés, ne donnent pas totalement satisfaction.

La présente invention a pour but de proposer une nouvelle structure de roulement intégrant un capteur de vitesse qui soit simple et autorise le phénomène dit de reptation. Ce phénomène dit de reptation sera explicité par la suite.

Ce but est atteint selon la présente invention grâce à un roulement présentant les caractéristiques définies dans la revendication 1 annexée.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique partielle en coupe axiale longitudinale d'un roulement conforme à un premier mode de réalisation de la présente invention,
- la figure 2 représente une vue en coupe similaire d'un roulement conforme à un second mode de réalisation de la présente invention,
- la figure 3 représente une vue en coupe similaire d'un roulement confome à un troisième mode de réalisation conforme à la présente invention, et
- la figure 4 représente une autre vue en coupe similaire d'un roulement conforme à un quatrième mode de réalisation conforme à la présente invention.

On aperçoit sur les figures annexées des roulements conformes à la présente invention comprenant essentiellement :
- une cage externe 100,
- une cage interne 120,
- des corps de roulement 150 placés entre la cage externe 100 et la cage interne 120,
- un aimant multipolaire 200, et
- deux demi-carcasses métalliques 300, 350 s'imbriquant l'une dans l'autre et recevant un bobinage 400.

Selon la représentation donnée sur les figures annexées, les corps de roulement 150 sont des billes. L'invention n'est cependant pas limitée à cette réalisation particulière. Les corps de roulement 150 peuvent être formés de toute structure connue de l'homme de l'art. Il peut s'agir par exemple de corps cylindriques à section constante ou de corps tronconiques disposés sur une ou plusieurs rangées entre la cage externe 100 et la cage interne 120.

La géométrie des cages 100, 120 représentée sur les figures annexées n'est bien entendu pas limitative et peut faire l'objet de nombreuses variantes.

Il est généralement prévu un fluide de lubrification, le plus souvent de la graisse, dans l'espace 110 formé entre la cage externe 100 et la cage interne 120 contenant les corps de roulement 150. Cet espace 110 doit donc être fermé et étanchéifié par deux structures de joint placées entre la cage externe 100 et la cage interne 120, de part et d'autre des corps de roulement 150.

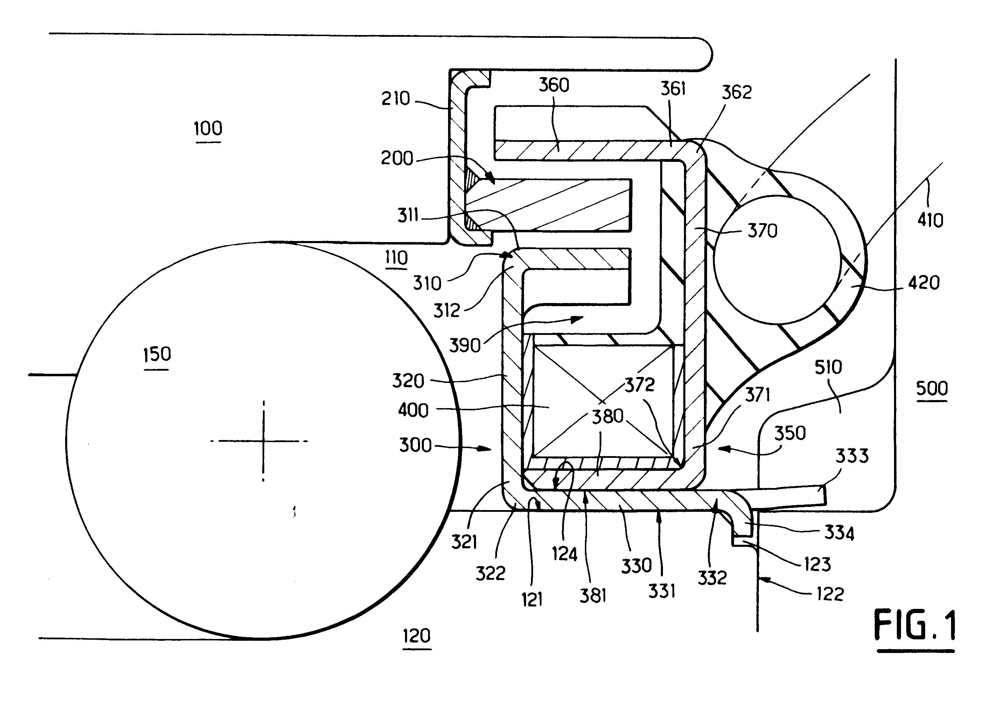

Selon le premier mode de réalisation représenté sur la figure 1 annexée, l'aimant multipolaire 200 est un aimant cylindrique centré sur l'axe O-O à aimantation radiale. L'aimant 200 est fixé sur une tole 210 pliée en U et emmanché à force sur la cage externe 100.

Les deux carcasses 300, 350 définissent des pièces polaires 310, 360 disposées respectivement de part et d'autre de l'aimant 200 à égale distance de celui-ci.

La pièce polaire 310 est placée radialement à l'intérieur de l'aimant annulaire 200 tandis que la pièce polaire 360 est placée au contraire radialement à l'extérieur de cet aimant annulaire 200.

Les deux carcasses 300, 350 ont une structure générale annulaire centrée sur l'axe O-O et de section droite constante. Plus précisément, selon la figure 1, les deux carcasses 300, 350 ont la forme générale d'un U.

La pièce polaire 310 constitue l'une des branches latérales de la première carcasse 300. Cette première branche 310 est donc cylindrique de révolution autour de l'axe de rotation du roulement.

Cette première branche 310 se prolonge, au niveau de son extrémité 311 axialement interne, par une seconde branche 320. La branche 320 a la forme d'une colerette plane orthogonale à l'axe de rotation du roulement. La première branche 310 et la seconde branche 320 sont reliées par une zone de pliage 312 sensiblement à 90°.

La seconde branche 320 s'étend radialement vers l'intérieur du roulement par rapport à la première branche 310.

La deuxième branche 320 se prolonge au niveau de son extrémité radialement interne 321 par une troisième branche 330. Cette troisième branche 330 est généralement cylindrique de révolution autour de l'axe de rotation du roulement. La troisième branche 330 s'étend radialement vers l'extérieur du roulement par rapport à la seconde branche 320. La seconde branche 320 et la troisième branche 330 sont reliées entre elles par une zone de pliage 322 sensiblement à 90°.

La surface périphérique radialement interne 331 de la troisième branche 330 est adaptée à la surface externe 121 de la cage fixe 120 du roulement, pour être emmanché sur celle-ci.

Au voisinage de son extrémité axialement externe 332, la troisième branche 330 de la première carcasse 300 comprend des premiers doigts 332. Ces doigts 332 s'étendent parallèlement à l'axe de rotation du roulement. Ils font saillie au-delà de la face axiale externe 122 de la cage fixe 120. Ainsi, les doigts 332 interfèrent avec des nervures 510 formées sur une pièce de chassis 500 adjacentes à la cage fixe 120 et sur laquelle cette dernière est fixée.

La coopération ainsi définie entre les premiers doigts 332 et les nervures 510 limite la rotation relative entre la carcasse 300 et le chassis 500.

Par ailleurs, toujours au voisinage de son extrémité axialement externe 332, la troisième branche 330 de la première carcasse 300 comprend des seconds doigts 334 pliés radialement vers l'intérieur du roulement. Ces doigts 334 s'étendent donc sensiblement perpendiculairement à l'axe de rotation de roulement. Ils sont placés dans une gorge 123 formés entre la bague fixe 120 et le chassis 500. La gorge 123 présente une largeur axiale sensiblement complémentaire des seconds doigts 334. Ainsi la coopération définie entre les seconds doigts 334 et la gorge 123 interdit pratiquement tout déplacement relatif de la carcasse 300 par rapport au chassis 500.

La carcasse 350 présente également une section droite en forme générale de U. La pièce polaire 360 constitue l'une des branches latérales de la seconde carcasse 350. Cette première branche 360 a la forme générale d'un cylindre de révolution autour de l'axe de rotation du roulement. Cette première branche 360 se prolonge, au niveau de son extrémité 361 axialement externe, par une seconde branche 370. La seconde branche 370 a la forme d'une colerette plane perpendiculaire à l'axe de rotation du roulement. La seconde branche 370 s'étend radialement vers l'intérieur par rapport à la première branche 360. La première branche 360 et la seconde branche 370 sont reliées entre elles par une zone de pliage 362 sensiblement à 90°.

La seconde branche 370 se prolonge elle-même, au niveau de son extrémité 371 radialement interne par une troisième branche 380. La troisième branche 380 est formée d'un cylindre centré sur l'axe de rotation du roulement. La troisième branche 380 s'étend axialement vers l'intérieur par rapport à la seconde branche 370. La seconde branche 370 et la troisième branche 380 sont reliées entre elles par une zone de pliage 372 sensiblement à 90°.

La surface périphérique radialement interne 381 de la troisième branche 380 de la seconde carcasse 350 est généralement complémentaire de la surface radialement externe 124 de la troisième branche 330 de la première carcasse 300. Ainsi, la seconde carcasse 350 peut être engagée à force sur la première carcasse 300. Dans cette positon les secondes branches 320, 370 sont généralement parallèles entre elles et définissent une chambre 390 recevant la bobine 400.

Les pièces polaires 310, 360 placées respectivement de part et d'autre de l'aimant annulaire 200 peuvent comprendre des doigts découpés équi-répartis autour de l'axe de rotation du roulement pour améliorer la détection des poles de l'aimant 200.

De préférence, comme cela est représenté schématiquement sur les figures annexées, les pièces polaires 310, 360, ne sont pas découpées mais munies d'ondulations régulières réparties sur la périphérie des pièces polaires. Cette disposition permet d'obtenir des pièces polaires plus solides et plus rigides, et par conséquent mieux positionnées par rapport à l'aimant 200.

L'utilisation de pièces polaires présentant de telles ondulations est connue de l'homme de l'art et ne sera donc pas décrite plus en détail par la suite.

On comprend aisément que lors d'une rotation relative entre la cage externe 100 et la cage interne 120, et par conséquent entre l'aimant 200 et les pièces polaires 310, 360, les pièces polaires détectent les poles successifs de l'aimant 200 et la variation de flux ainsi créée dans les pièces polaires 310, 360, par conséquent dans les carcasses 300, 350 génère un courant dans la bobine 400.

On a représenté schématiquement sur les figures annexées, sous la référence 410, un cable de sortie de capteur relié aux bornes de la bobine 400.

Le cas échéant, une masse de matière thermoplastique 420 peut être surmoulée sur la carcasse 350 et le cable 410.

Les carcasses 300, 350 sont réalisées en tout matériau approprié apte à conduire le flux magnétique, de préférence en fer doux.

On notera, et cela est important, que les doigts 333 et 334 sont prévus sur la demi-carcasse 300 serrés sur la bague fixe 120, et non pas sur la seconde demi-carcasse 350 séparée de la bague fixe 120.

Le cas échéant, on peut prévoir un joint d'étanchéité additionnel entre l'une des carcasses 300, 350 et la cage externe mobile 100 ou un élément lié à celle-ci, par exemple la tole 210 support d'aimant.

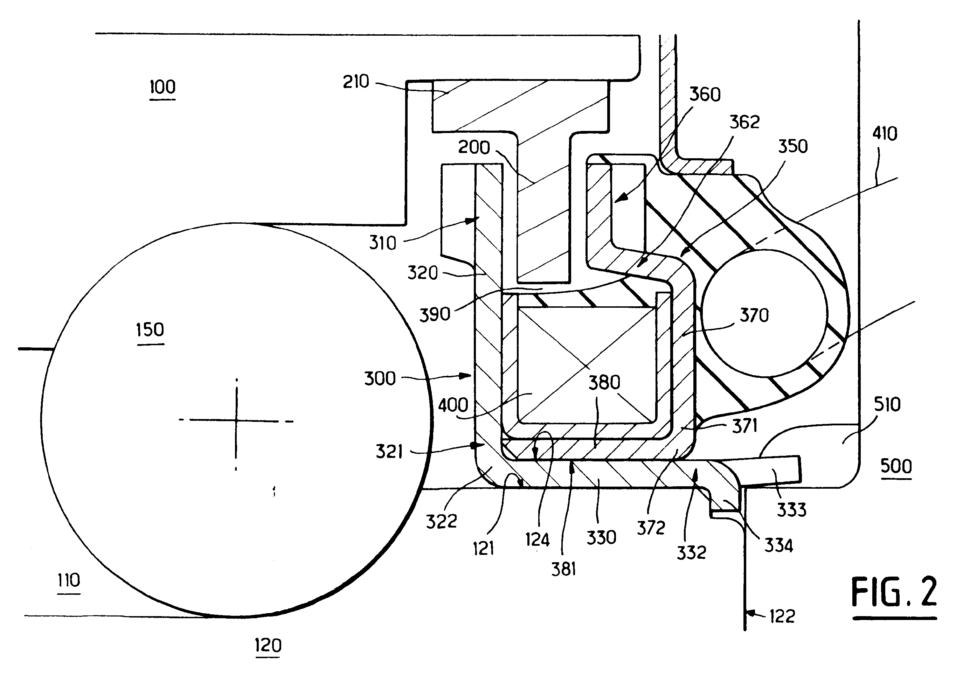

Le second mode de réalisation représenté sur la figure 2 correspond à une détection non plus radiale, mais axiale. C'est-à-dire que l'aimant annulaire multipolaire 200 centré sur l'axe de rotation du roulement présente une aimantation axiale.

Les pièces polaires 310, 360 sont adaptées en conséquence pour être placées respectivement de part et d'autre axialement des poles de l'aimant 200.

Plus précisément encore, selon le mode de réalisation représenté sur la figure 2, chacune des deux carcasses 300, 350, présente une section droite en forme générale de L.

La première carcasse 300 possède ainsi une branche 320 en forme de colerette plane orthogonale à l'axe de rotation du roulement. Cette branche 320 se prolonge au niveau de son extrémité axialement interne 321 par une branche 330. Cette branche 330 a la forme générale d'un cylindre centré sur l'axe de rotation du roulement et conçu pour être emmanché sur la cage interne 120. La branche 330 s'étend axialement vers l'extérieur par rapport à la branche 320. La branche 320 et la branche 330 sont reliées par une zone de pliage 322 sensiblement à 90°.

La branche 330 est munie au niveau de son extrémité axialement externe 332 de premiers doigts 333 et de seconds doigts 334 similaires à ceux précédemment décrits en regard de la figure 1.

De même, la seconde carcasse 350 comprend une branche 370 qui a la forme générale d'une colerette plane perpendiculaire à l'axe de rotation du roulement. Cette branche 370 se prolonge au niveau de son extrémité radialement interne 371 par une branche 380. Cette branche 380 a la forme générale d'un cylindre centré sur l'axe de rotation du roulement. Elle s'étend axialement vers l'intérieur par rapport à la branche 370. La branche 370 et la branche 380 sont reliées par une zone de pliage 372 sensiblement à 90°.

La branche 380 est conçue pour être engagée à force sur l'extérieur de la branche 330 de la première carcasse 300.

Ainsi, les deux carcasses 300, 350 définissent une chambre 390 apte à recevoir un bobinage 400.

Après engagement des deux carcasses 300, 350, les branches 320, 370 s'étendent sensiblement parallèlement.

Les parties des deux branches 320, 370 situées radialement à l'extérieur de la bobine 400 forment les pièces polaires 310, 360 précitées.

Comme indiqué précédemment, ces pièces polaires 310, 360 disposées respectivement de part et d'autre axialement de l'aimant annulaire 200 à aimantation axiale, peuvent comprendre des doigts découpés équi-répartis sur leur périphérie. Toutefois, de préférence, les pièces polaires 310, 360 présentent non pas des découpes mais des ondulations régulières.

Comme représenté sur la figure 2, pour éviter d'avoir un entre fer trop important entre l'aimant annulaire 200 et les pièces polaires 310, 360, on peut prévoir de réduire l'écart entre les pièces polaires 310, 360 par pliage de l'une au moins des branches des carcasses 300, 350 comme représenté sous la référence 362 pour la carcasse 350 sur la figure 2.

Le cas échéant, la branche 320 de la première carcasse 300 pourrait être pliée de façon symétrique.

Là encore, un joint d'étanchéité peut être prévu entre l'une des carcasses 300, 350 et la cage externe 100 ou un élément lié à celle-ci.

On notera que le mode de réalisation représenté sur la figure 2, impose d'engager simultanément l'aimant annulaire 200 sur la cage externe 100 et les deux carcasses 300, 350, sur la cage interne 120.

Selon les modes de réalisation représentés sur les figures 1 et 2, la cage fixe du roulement est la cage interne 120, tandis que la cage mobile est la cage externe 100.

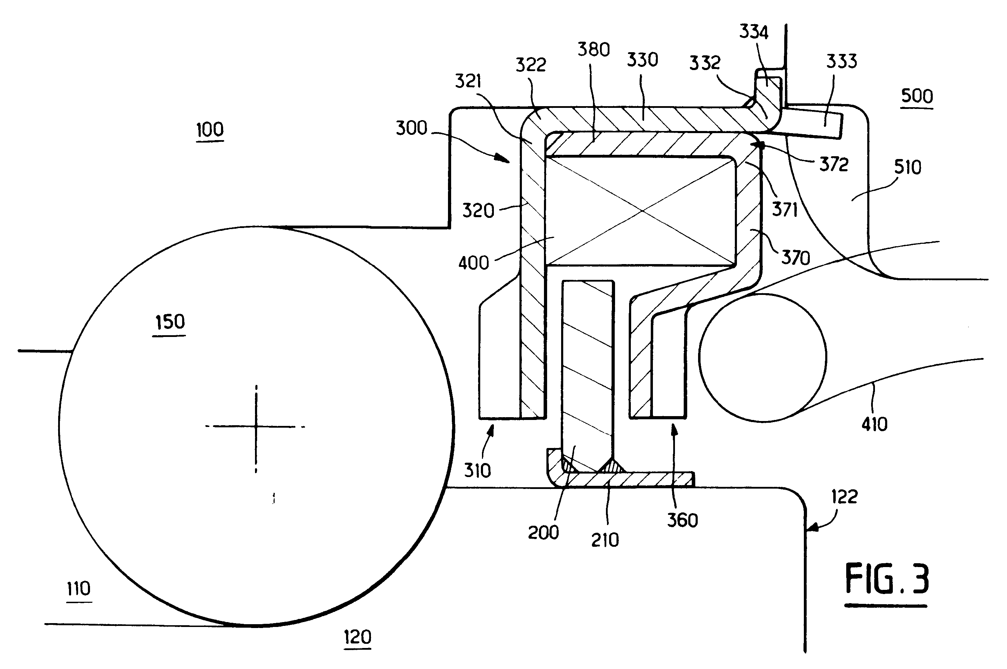

Au contraire, selon le mode de réalisation de la figure 3, la cage fixe est la cage externe 100, tandis que la cage mobile est la cage interne 120.

Pour cette raison, l'aimant multipolaire 200 et les carcasses 300, 350 recevant la bobine 400 sont permutés. En d'autres termes, l'aimant annulaire multipolaire 200 est solidaire de la cage interne 120 selon la représentation donnée sur la figure 3, tandis que les carcasses 300, 350 sont prévues sur la cage externe 100. Les carcasses 300, 350 représentées sur la figure 3, prévues pour une détection axiale, sont symétriques de celles représentées sur la figure 2 et précédemment décrites. Pour cette raison, les carcasses 300, 350 représentées sur la figure 3 ne seront pas décrites à nouveau par la suite.

On notera simplement que selon la figure 3, la carcasse 300 emmanchée sur la cage mobile externe 100 comprend des premiers doigts 333 qui interfèrent avec des nervures 510 prévues sur le chassis 500 pour limiter la rotation relative de la carcasse 300 par rapport au chassis et des seconds doigts 334 d'orientation radiale placés entre la cage fixe externe 100 et le chassis 500 pour interdire un déplacement axial de la carcassse 300.

Bien entendu, on pourra également envisager de placer une structure de détection radiale du type représenté sur la figure 2 sur un roulement à cage externe fixe. Pour cela, il suffit de placer un aimant 200 à aimantation radiale du type représenté sur la figure 1 sur la cage interne mobile 120 et de placer des carcasses 300, 350 symétriques de celles illustrées sur la figure 1 sur la cage externe mobile 100.

Selon les modes de réalisation représentés sur les figures 1 à 3, l'aimant annulaire 200 présente soit une aimantation radiale (figure 1), soit une aimantation axiale (figures 2 et 3).

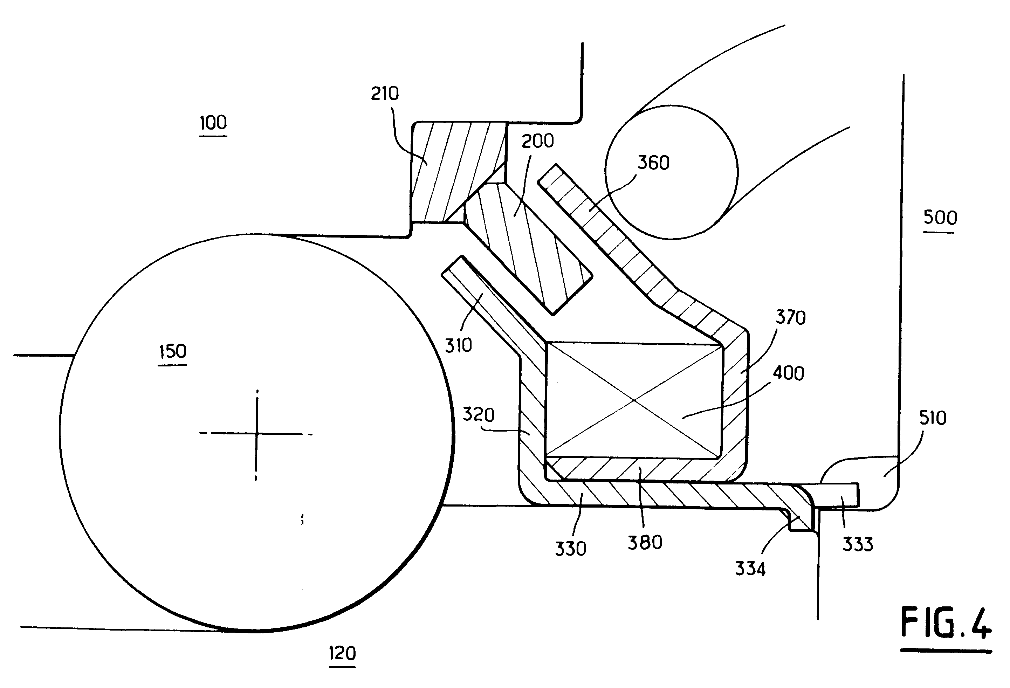

Comme représenté sur la figure 4, on peut prévoir des aimants annulaires multipolaires 200 présentant une orientation d'aimantation intermédiaire entre l'orientation radiale et l'orientation axiale. Selon la figure 4, l'orientation de l'aimantation est sensiblement à 45° de l'axe de rotation. Cette disposition n'est cependant pas limitative.

Bien entendu, les pièces polaires 310, 360 formées respectivement sur les carcasses 300, 350 doivent présenter une inclinaison identique.

Le mode de réalisation donné sur la figure 4 n'étant donné qu'à titre exemple, ne sera pas décrit plus en détail par la suite.

Les différents modes de réalisation conformes à la présente invention représentés sur les figures annexées et précédemment décrits autorisent une reptation de la cage dite fixe du roulement.

L'homme de l'art sait en effet que les cages dites fixes de roulement sont souvent entraînées en une rotation de faible amplitude par rapport au chassis support 500 sous l'effet du couple appliqué par les corps de roulement 150. Grâce à la structure proposée par la présente invention, un tel déplacement de la cage dite fixe du roulement est autorisé sans déplacer les carcasses 300, 350, grâce aux doigts 333.

Bien entendu la présente invention n'est pas limitée aux modes de réalisation particuliers qui viennent d'être décrits mais s'étend à toutes variantes conformes aux revendications.

Selon les modes de réalisation précédemment décrits, les doigts 333, 334 sont solidaires de la carcasse 330. En variante, l'une au moins des séries de doigts 333 ou 334 pourrait être formée par le cable 410 ou préférentiellement par la masse de thermoplastique 420 surmoulée sur celui-ci.

Le mode de réalisation représenté sur les figures 3 et 4 exige un montage simultané de l'aimant annulaire 200 et des carcasses 300, 350 sur leur cage de roulement respective, comme décrit précédemment pour la figure 2.

Le nombre de premiers doigts 333 et de seconds doigts 334 peut faire l'objet de diverses variantes. Il est prévu de préférence plusieurs premiers doigts 333 et plusieurs seconds doigts 334 équi-répartis autour de l'axe de rotation du roulement, bien qu'en théorie un seul premier doigt 333 et un seul second doigt 334 soient suffisants.

## Revendications

1. Roulement du type comprenant une cage externe (100), une cage interne (120), des corps de roulement (150) répartis entre la cage externe (100) et la cage interne (120), l'une de ces cages étant prévue pour être fixée sur un chassis (500), un aimant annulaire multipolaire (200) sur la cage mobile, et un transducteur électrique (400) sensible aux passages de l'aimant annulaire (200), placé sur un élément support (300) lié à rotation avec le chassis (500) par l'intermédiaire d'au moins un doigt (333) conçu pour interférer avec le chassis (500), caractérisé par le fait que le transducteur électrique (400) est formé d'un bobinage, l'élément support comprend deux demi-carcarsses (300, 350) métalliques s'imbriquant l'une dans l'autre, recevant le bobinage (400) et placées de part et d'autre de l'aimant (200), lesquelles carcasses portent les doigts (333) précités conçus pour interférer avec des nervures (510) prévues sur le chassis (500) pour limiter la rotation relative entre la carcasse correspondante et le chassis (500) et les carcasses portent des seconds doigts (334) placés entre la cage fixe et le chassis (500) pour interdire un déplacement axial de la carcasse correspondante.

2. Roulement selon la revendication 1, caractérisé par le fait que les carcasses (300, 350) sont formées de fer doux.

3. Roulement selon l'une des revendications 1 et 2, caractérisé par le fait que l'aimant (200) présente une aimantation axiale et que les deux carcasses (300, 350) présentent chacune des sections droites généralement en U imbriquées.

4. Roulement selon l'une des revendications 1 à 2, caractérisé par le fait que l'aimant (200) présente une aimantation généralement radiale et que les deux carcasses (300, 350) présentent des sections droites généralement en L imbriquées.

5. Roulement selon l'une des revendications 1 et 2, caractérisé par le fait que l'aimant (200) présente une aimantation intermédiaire entre une orientation axiale et une orientation radiale.

6. Roulement selon l'une des revendications 1 à 5, caractérisé par le fait que les premiers doigts (333) et les seconds doigts (334) sont formés sur la carcasse (300, 350) et engagés à force sur la cage fixe du roulement.

7. Roulement selon l'une des revendications 1 à 5, caractérisé par le fait que l'une au moins des séries de doigts (333, 334) est formée par le cable de sortie (410) du capteur.

8. Roulement selon l'une des revendications 1 à 5, caractérisé par le fait que l'une au moins des séries de doigts (333, 334) est formée par surmoulage d'une masse de matière thermoplastique (420) sur l'une des carcasses (350).

9. Roulement selon l'une des revendications 1 à 8, caractérisé par le fait qu'un joint d'étanchéité est prévu entre l'une des carcasses (350) et la cage mobile du roulement.

10. Roulement selon l'une des revendications 1 à 9, caractérisé par le fait que les pièces polaires (310, 360) de chacune des carcasses (300, 350) présentent des ondulations régulières équi-réparties.

11. Roulement selon l'une des revendications 1 à 10, caractérisé par le fait que la cage fixe est la cage externe (100) du roulement.

12. Roulement selon l'une des revendications 1 à 10, caractérisé par le fait que la cage fixe du roulement est la cage interne (120).

## Patentansprüche

1. Wälzlager mit einem äußeren Käfig (100), einem inneren Käfig (120), Wälzkörpern (150), die zwischen dem äußeren Käfig (100) und dem inneren Käfig (120) verteilt sind, wobei einer der Käfige so ausgebildet ist, daß er an einem Gehäuse (500) befestigt werden kann, und einem elektrischen Wandler (400), der auf die Durchgänge eines Ringmagneten (200) anspricht, der an einem Halteelement (300) angeordnet ist, das in Drehverbindung mit dem Gehäuse (500) über wenigstens einen dazwischen angeordneten Zapfen (333) steht, der so ausgebildet ist, daß er das Gehäuse (500) überlagert,
dadurch gekennzeichnet, daß der elektrische Wandler (400) in Form einer Spule ausgebildet ist, das Halteelement zwei metallische Halbrahmen (300, 350) umfaßt, die ineinander geschachtelt sind, die Spule (400) aufnehmen und auf der einen und der anderen Seite des Magneten (200) angeordnet sind, die Rahmen die genannten Zapfen (333) tragen, die so ausgebildet sind, daß sie Rippen (510) überlagern, die am Gehäuse (500) vorgesehen sind, um die relative Drehung zwischen dem entsprechenden Rahmen und dem Gehäuse (500) zu begrenzen, und die Rahmen zweite Zapfen (334) tragen, die zwischen dem festen Käfig und dem Gehäuse (500) angeordnet sind, um eine axiale Versetzung des entsprechenden Rahmens zu verhindern.

2. Wälzlager nach Anspruch 1, dadurch gekennzeichnet, daß die Rahmen (300, 350) aus Weicheisen gebildet sind.

3. Wälzlager nach einem der Ansprüche 1 und 2, dadurch gekennzeichnet, daß der Magnet (200) eine axiale Magnetisierung zeigt und daß die beiden Rahmen (300, 350) jeweils ineinander geschachtelte im wesentlichen U-förmige Querschnitte haben.

4. Wälzlager nach einem der Ansprüche 1 bis 2, dadurch gekennzeichnet, daß der Magnet (200) eine im wesentlichen radiale Magnetisierung hat und daß die beiden Rahmen (300, 350) im wesentlichen L-förmige ineinander geschachelte Querschnitte haben.

5. Wälzlager nach einem der Ansprüche 1 und 2, dadurch gekennzeichnet, daß der Magnet (200) eine Magnetisierung zwischen einer axialen Ausrichtung und einer radialen Ausrichtung hat.

6. Wälzlager nach einem der Ansprüche 1 bis 5, dadurch gekennzeichnet, daß die ersten Zapfen (333) und die zweiten Zapfen (334) an den Rahmen (300, 350) ausgebildet und kraftschlüssig mit dem festen Käfig des Wälzlagers verbunden sind.

7. Wälzlager nach einem der Ansprüche 1 bis 5, dadurch gekennzeichnet, daß wengistens eine der Reihen von Zapfen (333, 334) durch die Ausgangsleitung (410) des Wandlers gebildet ist.

8. Wälzlager nach einem der Ansprüche 1 bis 5, dadurch gekennzeichnet, daß wenigstens eine der Reihen von Zapfen (333, 334) dadurch gebildet ist, daß eine Masse (420) aus einem thermoplastischen Material an einen der Rahmen (350) gegossen ist.

9. Wälzlager nach einem der Ansprüche 1 bis 8, dadurch gekennzeichnet, daß eine Dichtung zwischen einem der Rahmen (350) und dem beweglichen Käfig des Wälzlagers vorgesehen ist.

10. Wälzlager nach einem der Ansprüche 1 bis 9, dadurch gekennzeichnet, daß die Polstücke (310, 360) jedes Rahmens (300, 350) regelmäßig gleich beabstandete Wellungen aufweisen.

11. Wälzlager nach einem der Ansprüche 1 bis 10, dadurch gekennzeichnet, daß der feste Käfig der äußere Käfig (100) des Wälzlagers ist.

12. Wälzlager nach einem der Ansprüche 1 bis 10, dadurch gekennzeichnet, daß der feste Käfig des Wälzlagers der innere Käfig (120) ist.

## Claims

1. A bearing of the type comprising an outer cage (100), an inner cage (120), rolling bodies (150) distributed between the outer cage (100) and the inner cage (120), one of said cages being designed to be fixed to a chassis (500), a multipolar annular magnet (200) on the moving cage, and an electrical transducer (400) responsive to passages of the annular magnet (200), placed on a support element (300) constrained to rotate with the chassis (500) via at least one finger (333) designed to interfere with the chassis (500), characterized by the fact that the electrical transducer (400) is constituted by a coil, the support element comprises two interfitting metal half-shells (300, 350) that receive the coil (400) and that are placed on either side of the magnet (200), which shells carry the above-specified fingers (333) designed to interfere with ribs (510) provided on the chassis (500) to limit relative rotation between the corresponding shell and the chassis (500), and the shells carrying second fingers (334) placed between the fixed cage and the chassis (500) to prevent axial displacement of the corresponding shell.

2. A bearing according to claim 1, characterized by the fact that the shells (300, 350) are made of soft iron.

3. A bearing according to claim 1 or 2, characterized by the fact that the magnet (200) has axial magnetization, and that the two shells (300, 350) have right sections that are generally in the form of interfitting U-shapes.

4. A bearing according to claim 1 or 2, characterized by the fact that the magnet (200) has generally radial magnetization, and that the two shells (300, 350) have right sections that are generally in the form of interfitting L-shapes.

5. A bearing according to claim 1 or 2, characterized by the fact that the magnet (200) has magnetization intermediate between an axial orientation and a radial orientation.

6. A bearing according to any one of claims 1 to 5, characterized by the fact that the first fingers (333) and the second fingers (334) are formed on the shell (300, 350) and are engaged by force on the fixed cage of the bearing.

7. A bearing according to any one of claims 1 to 5, characterized by the fact that at least one of the series of fingers (333, 334) is formed by the outlet cable (410) from the sensor.

8. A bearing according to any one of claims 1 to 5, characterized by the fact that at least one of the series of fingers (333, 334) is formed by molding a mass of thermoplastic material (420) onto one of the shells (350).

9. A bearing according to any one of claims 1 to 8, characterized by the fact that a sealing gasket is provided between one of the shells (350) and the moving cage of the bearing.

10. A bearing according to any one of claims 1 to 9, characterized by the fact that the pole pieces (310, 360) of each of the shells (300, 350) has regular undulations that are uniformly spaced apart.

11. A bearing according to any one of claims 1 to 10, characterized by the fact that the fixed cage is the outer cage of the bearing.

12. A bearing according to any one of claims 1 to 10, characterized by the fact that the fixed cage of the bearing is the inner cage (120).
